# FASCICULE DE BREVET EUROPEEN

(11) **EP 3 960 513 B1**
(45) Date de publication et mention de la délivrance du brevet: **13.12.2023**
(21) Numéro de dépôt: 21164350.7
(22) Date de dépôt: 23.03.2021
(51) Int. Cl.: B60K 1/02, B60K 1/00, B60K 17/35, B60K 17/356, B60K 17/354, B60K 17/22, B60K 23/08

(54) **VÉHICULE AUTOMOBILE ET SES UTILISATIONS**
KRAFTFAHRZEUG UND SEINE VERWENDUNGEN
MOTOR VEHICLE AND USES THEREOF

(30) Priorité: 24.03.2020 FR 2002846
(43) Date de publication de la demande: 02.03.2022
(73) Titulaire: Arquus, 78000 Versailles (FR)
(72) Inventeur: VIELLARD, Jérôme, Thierry, 75015 PARIS (FR)
(74) Mandataire: Lavoix

(56) Documents cités:
- EP-A1- 2 851 227
- DE-A1- 10 319 108
- DE-A1-102011 056 047
- GB-A- 2 571 331

## Description

La présente invention concerne un véhicule et des utilisations de ce véhicule.

L'invention se rapporte de préférence au domaine des véhicules automobiles terrestres roulants, pour une utilisation militaire, minière, ou sportive, notamment des véhicules qui sont à la fois adaptés pour une conduite sur route et pour une conduite hors route.

DE 10 2010 024 191 A1 propose un véhicule automobile, comprenant une transmission reliée fonctionnellement à deux essieux comportant chacun deux roues. Le véhicule comprend également une pluralité de moteurs électriques, qui peuvent être individuellement commandés et individuellement couplés ou découplés de la transmission, de sorte que le couple de chaque moteur peut être sélectivement appliqué sur la transmission, et donc aux essieux, pour le roulage du véhicule. Le nombre de moteurs accouplés détermine ainsi le couple applicable aux roues. Dans la mesure où la transmission assujettit mutuellement la rotation des deux essieux, cette configuration est adaptée pour une conduite tout terrain ou pour le franchissement d'obstacle, le couple de tous les moteurs étant transmis indistinctement aux deux essieux. Ainsi, même si les roues du premier essieu ne sont pas en contact avec le sol, ou sont en contact sans adhérence, l'intégralité du couple des moteurs est reportée sur le deuxième essieu, ce qui assure le roulage du véhicule. Cette configuration est cependant inadaptée pour une conduite sur route, puisque l'assujettissement en rotation des deux essieux leur interdit d'adopter une vitesse différente d'un essieu par rapport à l'autre, ce qui peut fortement nuire à la tenue de route et conduire à une usure accélérée des pneumatiques équipant les roues.

DE 10 2010 024 191 A1 propose une autre solution, dans laquelle l'accouplement des moteurs à la transmission s'effectue au travers d'un différentiel mécanique commun, afin de distribuer le couple fourni par les moteurs entre les deux essieux. Si cette option donne un comportement satisfaisant sur route, elle présente l'inconvénient que le véhicule n'est pas adapté pour une conduite hors route, par exemple en tout terrain ou en franchissement d'obstacle. Dans cette option, si l'un des essieux n'est pas en contact avec le sol, ou est en contact glissant avec le sol, l'autre essieu ne reçoit qu'une faible proportion du couple fourni par les moteurs, du fait de la répartition du couple moteur par le différentiel, qui peut ne pas suffire à assurer le roulage du véhicule.

DE 103 19 108 A1, qui se rapproche le plus de l'invention, décrit un véhicule à quatre roues motrices à entraînement hybride, incluant un moteur à combustion interne avec une boîte de vitesses, un train roulant avant, un train roulant arrière et un moteur électrique. Les trains avant et arrière sont reliés par un arbre de transmission avec embrayage.

EP 2 851 227 A1 décrit un véhicule hybride, incluant un moteur à combustion interne, un train roulant avant, un train roulant arrière et un moteur électrique. Les trains avant et arrière sont reliés par un arbre de transmission.

GB 2 571 331 A décrit un véhicule avec deux trains roulants, chaque train roulant comportant un moteur électrique et une boîte de vitesses.

L'invention vise donc à fournir un nouveau véhicule dont l'actionnement en roulage est particulièrement polyvalent, tout en présentant une architecture particulièrement simple.

L'invention a pour objet un véhicule automobile comprenant un premier train roulant et un deuxième train roulant, chaque train roulant supportant le véhicule et comprenant un organe d'entrée individuel, pour l'entraînement en roulage dudit train roulant lorsque ledit organe d'entrée est entraîné en rotation. Le véhicule comprend en outre une transmission, qui est configurée pour assujettir mutuellement en rotation l'organe d'entrée du premier train roulant et l'organe d'entrée du deuxième train roulant. Selon l'invention, le véhicule automobile comprend un premier groupe moteur, associé au premier train roulant, et un deuxième groupe moteur, associé au deuxième train roulant, chaque groupe moteur comprenant un moteur individuel et une boîte de vitesses individuelle, la boîte de vitesses étant configurée pour mutuellement assujettir en rotation le moteur dudit groupe moteur et l'organe d'entrée du train roulant auquel ledit groupe moteur est associé. Selon l'invention, la transmission est configurée pour adopter alternativement : une configuration de synchronisation, dans laquelle la transmission assujettit mutuellement en rotation l'organe d'entrée du premier train roulant et l'organe d'entrée du deuxième train roulant ; et une configuration de désynchronisation, dans laquelle la transmission libère en rotation l'un de l'autre l'organe d'entrée du premier train roulant et l'organe d'entrée du deuxième train roulant.

Par l'expression « assujettit mutuellement en rotation », on entend que la rotation des organes d'entrée est entièrement liée, par exemple en ce que les organes d'entrées sont contraints de tourner à la même vitesse, ou à une vitesse proportionnelle l'un par rapport à l'autre avec un rapport de réduction fixe.

Une idée à la base de l'invention est que, en configuration de synchronisation, le véhicule est plutôt adapté pour une conduite hors route, le couple fourni par le premier groupe moteur et le couple fourni par le deuxième groupe moteur étant transmis de façon combinée et indistincte au premier train roulant et au deuxième train roulant. En d'autres termes, on ne prévoit pas de distribution du couple des moteurs entre les deux trains roulants à l'aide d'un différentiel mécanique, les moteurs entraînant de façon indistincte les deux trains roulants par l'intermédiaire de la transmission, sans préférence d'un train roulant vis-à-vis de l'autre train roulant. Les organes d'entrée des trains roulants ne peuvent pas tourner l'un sans l'autre. Ainsi, même si le premier train roulant n'est pas en contact avec le sol, ou est en contact sans adhérence avec le sol, l'intégralité du couple respectif des deux groupes moteurs est appliquée, en s'additionnant, sur l'organe d'entrée du deuxième train roulant, et vice-versa, ce qui assure le roulage du véhicule en toutes circonstances. Le couple des deux groupes moteurs s'additionnant, le dimensionnement individuel des deux moteurs peut être réduit.

En configuration de désynchronisation, le véhicule est plutôt adapté pour une conduite sur route, puisque les deux trains roulants sont mécaniquement indépendants l'un de l'autre, en particulier pour leur vitesse de roulage et pour le couple qu'ils reçoivent respectivement des deux groupes moteurs. En d'autres termes, en configuration de désynchronisation, le premier train roulant et le premier groupe moteur sont complètement séparés, mécaniquement, du deuxième train roulant et du deuxième groupe moteur, en n'étant reliés par aucune transmission mécanique du véhicule. Le premier train roulant n'est entraîné que par le premier groupe moteur, alors que le deuxième train roulant n'est entraîné que par le deuxième groupe moteur.

Dans cette configuration de désynchronisation, on peut prévoir d'utiliser par exemple seulement le premier groupe moteur pour actionner seulement le premier train roulant, alors que le deuxième groupe moteur n'applique pas de couple sur le deuxième train roulant : le roulage du véhicule est alors actionné selon une traction ou selon une propulsion.

En configuration de désynchronisation, on peut également prévoir que le premier groupe moteur actionne le roulage du premier train roulant, simultanément à ce que le deuxième groupe moteur actionne le roulage du deuxième train roulant. Pour cela, on prévoit avantageusement une unité de commande, par exemple électronique, pour commander le premier groupe moteur et le deuxième groupe moteur de façon à ce qu'ils actionnent leur organe d'entrée respectif avec un couple et une vitesse de rotation appropriée à la situation de conduite. Cela peut par exemple permettre de retrouver un mode de roulage proche de celui d'un véhicule tout terrain classique, où deux essieux sont actionnés par un unique moteur dont le couple est distribué entre les deux essieux par l'intermédiaire d'un différentiel. En configuration de désynchronisation, on peut prévoir que le premier groupe moteur actionne le roulage du premier train roulant, simultanément à ce que le deuxième groupe moteur actionne le roulage du deuxième train roulant, les deux groupes moteurs appliquant un couple respectif différent, par exemple plus élevé pour le premier train roulant que pour le deuxième train roulant, afin d'obtenir des caractéristiques particulières de conduite, par exemple en matière de tenue de route.

En outre, le fait de mettre en oeuvre la configuration de synchronisation, même temporairement, peut permettre d'obtenir une conduite sans rupture de couple moteur entraînant le premier train roulant et/ou le deuxième train roulant en roulage. En particulier, en configuration de synchronisation, les deux trains roulants sont en permanence actionnés par au moins l'un des deux groupes moteurs, même si l'autre groupe moteur ne fournit temporairement pas de couple, par exemple durant un changement de rapport de boîte de vitesses de cet autre groupe moteur.

Avec une architecture particulièrement simple, l'invention permet ainsi au véhicule de mettre en oeuvre de nombreux modes de conduite de façon à être très polyvalent.

De préférence la transmission est configurée pour que, lorsque la transmission est en configuration de synchronisation, la vitesse de rotation de l'organe d'entrée du premier train roulant est égale à la vitesse de rotation de l'organe d'entrée du deuxième train roulant.

De préférence, la transmission comprend au moins un embrayage, qui, en configuration de synchronisation, assujettit mutuellement en rotation l'organe d'entrée du premier train roulant avec l'organe d'entrée du deuxième train roulant, et qui, en configuration de désynchronisation, libère en rotation l'un de l'autre l'organe d'entrée du premier train roulant et l'organe d'entrée du deuxième train roulant.

De préférence, le premier train roulant constitue un train roulant avant du véhicule ; le deuxième train roulant constitue un train roulant arrière du véhicule ; et la transmission comprend : un arbre de transmission longitudinal, un embrayage avant, qui : en configuration de synchronisation, assujettit mutuellement en rotation l'arbre de transmission longitudinal et l'organe d'entrée du premier train roulant ; et en configuration de désynchronisation, libère en rotation l'un de l'autre l'arbre de transmission longitudinal et l'organe d'entrée du premier train roulant ; et un embrayage arrière, qui : en configuration de synchronisation, assujettit mutuellement en rotation l'arbre de transmission longitudinal et l'organe d'entrée du deuxième train roulant ; et en configuration de désynchronisation, libère en rotation l'un de l'autre l'arbre de transmission longitudinal et l'organe d'entrée du deuxième train roulant.

De préférence, l'embrayage avant et l'embrayage arrière sont des embrayages à crabots.

De préférence, chaque train roulant constitue un essieu respectif du véhicule et comprend : deux roues supportant le véhicule et par l'intermédiaire desquelles le roulage du véhicule peut être opéré ; et un différentiel, actionné par l'organe d'entrée dudit train roulant et distribuant aux deux roues dudit train roulant l'entraînement en rotation reçu audit organe d'entrée.

De préférence, pour chaque groupe moteur, la boîte de vitesses présente : une configuration d'entraînement, dans laquelle la boîte de vitesses assujettit mutuellement en rotation le moteur dudit groupe moteur et l'organe d'entrée du train roulant associé audit groupe moteur, la configuration d'entraînement pouvant être adoptée indépendamment du fait que la transmission soit en configuration de synchronisation ou en configuration de désynchronisation ; et une configuration de changement de rapport, dans laquelle, pour effectuer un changement de rapport, la boîte de vitesses libère en rotation l'un de l'autre le moteur dudit groupe moteur et l'organe d'entrée du train roulant associé audit groupe moteur, la configuration de changement de rapport pouvant être adoptée indépendamment du fait que la transmission soit en configuration de synchronisation ou en configuration de désynchronisation.

L'invention concerne également une utilisation d'un véhicule automobile conforme à ce qui précède, l'utilisation comprenant : une mise en configuration de synchronisation de la transmission lorsque le véhicule automobile effectue une conduite hors route, une conduite tout-terrain, ou une conduite visant à franchir un obstacle ; et une mise en configuration de désynchronisation de la transmission lorsque le véhicule automobile effectue une conduite sur route ou une conduite à haute vitesse.

L'invention concerne également une utilisation d'un véhicule automobile conforme à ce qui précède, l'utilisation comprenant : une étape A : mettre ou maintenir la transmission en configuration de synchronisation, alors que les boîtes de vitesses respectives du premier groupe moteur et du deuxième groupe moteur sont en configuration d'entraînement ; puis une étape B : mettre la boîte de vitesses du deuxième groupe moteur en configuration de changement de rapport, alors que la transmission est maintenue en configuration de synchronisation et que la boîte de vitesses du premier groupe moteur est maintenue en configuration d'entraînement ; puis une étape C : mettre la boîte de vitesses du deuxième groupe moteur à nouveau en configuration d'entraînement alors que la transmission est maintenue en configuration de synchronisation et que la boîte de vitesses du premier groupe moteur est maintenue en configuration d'entraînement.

De préférence, chaque moteur est un moteur électrique ; et l'étape B comprend de suralimenter le moteur du premier groupe moteur en énergie électrique, comparativement à l'alimentation électrique fournie au moteur du premier groupe moteur durant l'étape A, afin de compenser la libération en rotation l'un de l'autre du moteur du deuxième groupe moteur et de l'organe d'entrée du deuxième train roulant.

L'invention et les avantages qui en découlent seront mieux compris à l'aide de la description qui suit, concernant des exemples de réalisation de l'invention donnés dans un but non limitatif, et en référence aux dessins annexés dans lesquels :
[Fig 1] La figure 1 montre une vue schématique du dessous d'un véhicule automobile selon un mode de réalisation conforme à l'invention.
[Fig 2] La figure 2 montre une vue similaire à celle de la figure 1, d'un véhicule automobile selon un deuxième mode de réalisation conforme à l'invention.
[Fig 3] La figure 3 montre une vue similaire à celles des figures 1 et 2, d'un véhicule automobile selon un troisième mode de réalisation conforme à l'invention.

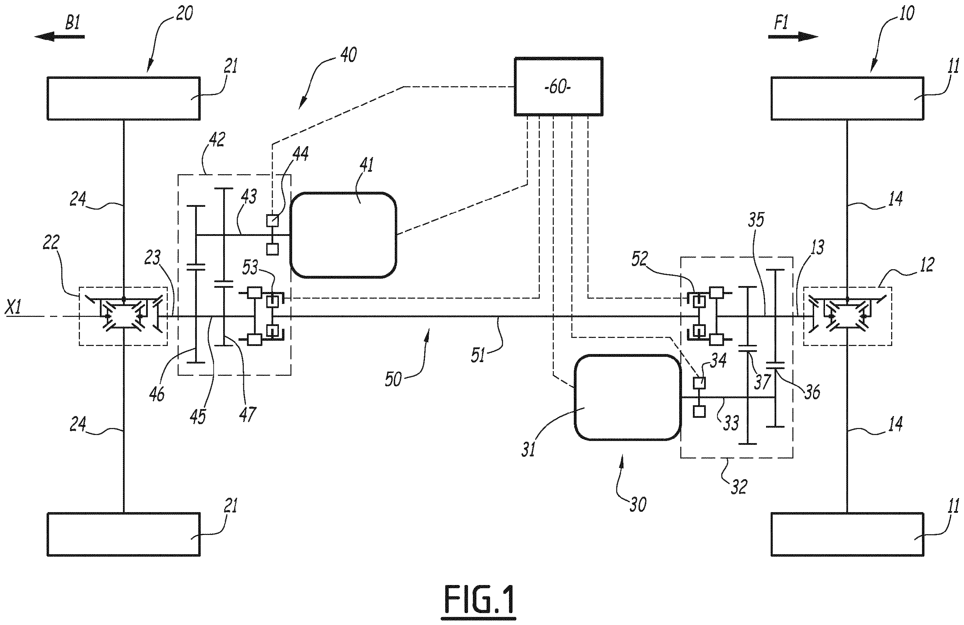

Le véhicule automobile représenté sur la figure 1 est un véhicule automobile roulant. De préférence, le véhicule est adapté pour rouler d'une part sur route et d'autre part hors route.

Le véhicule automobile est préférentiellement prévu pour transporter un ou plusieurs passagers, incluant avantageusement un pilote du véhicule, et éventuellement un chargement matériel. Pour cela, le véhicule automobile comprend avantageusement un habitacle pour recevoir le ou les passagers, avantageusement avec un poste de conduite pour le pilote, et/ou un hayon pour recevoir le chargement, qui ne sont pas représentés.

En variante, on prévoit que le véhicule soit un véhicule sans passager et/ou sans pilote, par exemple pour être utilisé sur une plateforme de transport de matériel. Par exemple, le véhicule peut être piloté à distance, ou être partiellement ou totalement autonome.

Le véhicule automobile comprend avantageusement un châssis. Le châssis supporte les éventuels habitacle et/ou hayon.

Sur la figure 1, on définit un axe longitudinal X1 du véhicule, ainsi qu'une direction avant F1 et une direction arrière B1 opposées et parallèles à l'axe X1. L'axe X1 est fixe par rapport au châssis. Lorsque le véhicule est en roulage en ligne droite et en marche avant, le véhicule se déplace selon la direction F1. En marche arrière, le véhicule se déplace selon la direction B1.

De manière générale, le véhicule comprend un train roulant 10, un train roulant 20, un groupe moteur 30, un groupe moteur 40 et une transmission 50. Le véhicule comprend préférentiellement une unité de commande 60.

Le véhicule est configuré pour reposer sur le sol par l'intermédiaire des trains roulants 10 et 20. Alors, les trains roulants supportent le châssis du véhicule, préférentiellement de façon suspendue par l'intermédiaire de suspensions connectant les trains roulants 10 et 20 audit châssis. C'est par l'intermédiaire des trains roulants 10 et 20 que le véhicule est entraîné en roulage.

Le train roulant 10 constitue avantageusement un train roulant avant du véhicule, en ce qu'il est positionné dans la direction F1 par rapport au train roulant 20. Le train roulant 20 constitue avantageusement un train roulant arrière du véhicule, en ce qu'il est positionné dans la direction B1 par rapport au train roulant 10.

Dans le présent exemple, le train roulant 10 comprend deux roues 11 et le train roulant comprend deux roues 21, par l'intermédiaire desquelles le véhicule est supporté. Chaque roue 11 et 21 est avantageusement pourvue de pneumatiques et d'une jante. Les roues 11 et 21 constituent avantageusement les seules parties du véhicule destinées à être en contact avec le sol pour supporter le véhicule. Les deux roues 11 sont réparties transversalement de part et d'autre de l'axe X1. Les deux roues 21 sont réparties transversalement de part et d'autre de l'axe X1. Les deux roues 11 sont disposées dans la direction F1 par rapport aux deux roues 21. C'est par l'intermédiaire des roues 11 et 21 que le roulage du véhicule est opéré. Pour cela, chaque roue 11 et 21 peut individuellement être entraînée en rotation sur elle-même.

En variante, chaque train roulant 10 et 20 peut comprendre un nombre de roues différent de deux. En lieu et place de roues, on pourrait prévoir tout autre moyen de roulage individuel pour chaque train roulant 10 et 20, tel qu'un système de chenilles individuel.

Au moins l'un des trains roulants 10 et/ou 20 est directionnel, par exemple par pivotement en lacet des roues 11 et/ou 12, pour permettre de modifier la direction de roulage du véhicule.

Le train roulant 10 comprend avantageusement un différentiel 12, un organe d'entrée 13 et deux arbres 14. Chaque arbre 14 relie l'une des roues 11 au différentiel 12. En soi, l'organe d'entrée 13 peut être constitué par un arbre, comme illustré, cet arbre étant parallèle à l'axe X1 et étant rotatif sur lui-même par rapport au châssis. Chaque arbre 14 et sa roue 11 respective sont mutuellement assujettis en rotation, par exemple en tournant à la même vitesse. Pour relier le différentiel 12 à la roue 11, chaque arbre 14 porte avantageusement des joints de cardan permettant avantageusement certains mouvements des roues par rapport au différentiel 12, notamment pour la direction et/ou pour les suspensions du véhicule. Le différentiel 12 distribue la rotation de l'organe 13 aux arbres 14, et donc au roues 11. Les roues 11 sont donc entraînées en rotation par l'organe 13, de façon distribuée par l'intermédiaire du différentiel 12. Du fait de la présence du différentiel 12, les roues 11 ne sont pas mutuellement assujetties en rotation, et l'organe 13 n'est pas mutuellement assujetti en rotation respectivement avec les roues 11. Les roues 11 sont toutefois actionnées en rotation par l'organe d'entrée 13, la rotation de l'organe d'entrée 13 étant entièrement convertie en rotation des roues 11.

Par exemple, le différentiel 12 entraîne chaque roue 11 en rotation sur elle-même par l'intermédiaire de l'arbre 14 qui relie cette roue 11 au différentiel 12. Pour cela, chaque arbre 14 porte avantageusement un pignon planétaire du différentiel 12, les arbres 14 étant coaxiaux au niveau du différentiel 12. Le différentiel 12 comprend avantageusement un ou deux pignons satellites, engainés par les pignons planétaires. Le différentiel 12 comprend en outre une cage, qui est rotative autour du même axe que les arbres 14 et qui porte les pignons satellites. La cage porte elle-même une couronne dentée du différentiel 12. L'organe 13 porte un pignon d'attaque qui engrène avec la couronne dentée pour entraîner en rotation la cage, ce qui entraîne en rotation les deux arbres 14, de façon distribuée grâce aux pignons satellites.

Plus généralement, un entraînement en rotation de l'organe d'entrée 13 individuel du train roulant 10 entraîne la rotation des roues 11, c'est-à-dire entraîne le roulage du train roulant 10, afin d'assurer le roulage du véhicule, le différentiel 12 distribuant aux roues 11 l'entraînement en rotation reçu par l'organe d'entrée 13.

Dans la mesure où le train roulant 10 comprend deux roues 11 et le différentiel 12, ledit train roulant 10 constitue un essieu du véhicule, ici un essieu avant.

Toutefois, le train roulant 10 peut se présenter sous une forme tout à fait différente de celle décrite ci-avant. Plus généralement, le train roulant 10 comprend tout moyen apte à transmettre par roulage au sol la puissance mécanique reçue à l'organe d'entrée 13, ces moyens pouvant être différents que les arbres 14, les roues 11 et le différentiel 12. Ces moyens peuvent inclure tout type de transmission adaptée, incluant ou non un différentiel et/ou un réducteur, et tout élément roulant sur le sol tel que des chenilles et/ou des roues.

De même, le train roulant 20 comprend avantageusement un différentiel 22, un organe d'entrée 23 et deux arbres 24. Chaque arbre 24 relie l'une des roues 21 au différentiel 22. En soi, l'organe d'entrée 23 peut être constitué par un arbre, comme illustré, cet arbre étant parallèle à l'axe X1 et étant rotatif sur lui-même par rapport au châssis. Chaque arbre 24 et sa roue 21 respective sont mutuellement assujettis en rotation, par exemple en tournant à la même vitesse. Pour relier le différentiel 22 à la roue 21, chaque arbre 24 porte avantageusement des joints de cardan permettant avantageusement certains mouvements des roues par rapport au différentiel 22, notamment pour la direction et/ou pour les suspensions du véhicule. Le différentiel 22 distribue la rotation de l'organe 23 aux arbres 24, et donc au roues 21. Les roues 21 sont donc entraînées en rotation par l'organe 23, de façon distribuée par l'intermédiaire du différentiel 22. Du fait de la présence du différentiel 22, les roues 21 ne sont pas mutuellement assujetties en rotation, et l'organe 23 n'est pas mutuellement assujetti en rotation respectivement avec les roues 21. Les roues 21 sont toutefois actionnées en rotation par l'organe d'entrée 23, la rotation de l'organe d'entrée 23 étant entièrement convertie en rotation des roues 21.

Le différentiel 22 présente avantageusement une structure similaire à celle du différentiel 12.

Plus généralement, un entraînement en rotation de l'organe d'entrée 23 individuel du train roulant 20 entraîne la rotation des roues 21, c'est-à-dire entraîne le roulage du train roulant 10, afin d'assurer le roulage du véhicule, le différentiel 12 distribuant aux roues 11 l'entraînement en rotation reçu par l'organe d'entrée 13.

Dans la mesure où le train roulant 20 comprend deux roues 21 et le différentiel 22, ledit train roulant 20 constitue un essieu du véhicule, ici un essieu arrière.

Toutefois, le train roulant 20 peut se présenter sous une forme tout à fait différente de celle décrite ci-avant. Plus généralement, le train roulant 20 comprend tout moyen apte à transmettre par roulage au sol la puissance mécanique reçue à l'organe d'entrée 23, ces moyens pouvant être différents que les arbres 24, les roues 21 et le différentiel 22. Ces moyens peuvent inclure tout type de transmission adaptée, incluant ou non un différentiel et/ou un réducteur, et tout élément roulant sur le sol tel que des chenilles et/ou des roues.

Les organes d'entrée 13 et 23 sont distincts l'un de l'autre.

L'unité de commande 60 comprend avantageusement un ordinateur embarqué sur le véhicule, dont la fonction est de commander automatiquement certains organes du véhicule décrits dans ce qui suit. Pour cela, l'unité de commande 60 comprend avantageusement une mémoire, sur laquelle un programme informatique est stocké, et un processeur pour exécuter ce programme informatique. Pour commander un organe particulier, on prévoit avantageusement que l'unité de commande 60 est connectée, par exemple de façon filaire, audit organe. L'unité de commande 60 commande lesdits organes en fonction d'informations qu'elle reçoit et qu'elle traite selon le programme d'ordinateur, ces informations provenant de sources diverses, notamment de capteurs équipant le véhicule, et/ou de commandes de pilotage à disposition du pilote du véhicule.

La transmission 50 est configurée pour adopter une configuration de synchronisation et une configuration de désynchronisation des trains roulants 10 et 20. Ces configurations sont adoptées alternativement, c'est-à-dire l'une ou l'autre. Dans le présent exemple, la transmission 50 comprend un arbre de transmission longitudinal 51, un embrayage avant 52 et un embrayage arrière 53.

L'arbre longitudinal 51 est parallèle à l'axe X1, ou, pour le moins, est dirigé d'avant en arrière du véhicule. L'arbre 51 est rotatif sur lui-même par rapport au châssis.

L'embrayage avant 52 relie une extrémité arrière de l'arbre constituant l'organe 13 à une extrémité avant de l'arbre 51. En d'autres termes, l'organe 13 relie le différentiel 12 à l'arbre 51, par l'intermédiaire de l'embrayage 52. L'embrayage avant 52 est avantageusement un embrayage à crabots, qui présente l'avantage d'être relativement facile à concevoir tout en assurant une connexion fiable.

En configuration de synchronisation, l'embrayage 52 est embrayé, de façon à solidariser mutuellement en rotation l'arbre 51 et l'organe 13. L'arbre 51 et l'organe 13 ont alors la même vitesse de rotation. Plus généralement, on prévoit que l'embrayage avant 52 assujettit mutuellement en rotation l'arbre 51 et l'organe 13 lorsque la transmission est en configuration de synchronisation.

En configuration de désynchronisation, l'embrayage 52 est débrayé, de façon à rendre l'arbre 51 et l'organe 13 mécaniquement indépendants, c'est-à-dire, pour le moins, à les libérer en rotation l'un de l'autre.

L'embrayage arrière 53 relie une extrémité arrière de l'arbre constituant l'organe 23 à une extrémité arrière de l'arbre 51. En d'autres termes, l'organe 23 relie le différentiel 22 à l'arbre 51, par l'intermédiaire de l'embrayage 53. L'embrayage arrière 53 est avantageusement un embrayage à crabots.

En configuration de synchronisation, l'embrayage 53 est embrayé, de façon à solidariser mutuellement en rotation l'arbre 51 et l'organe 23. L'arbre 51 et l'organe 23 ont alors la même vitesse de rotation. Plus généralement, on prévoit que l'embrayage arrière 53 assujettit mutuellement en rotation l'arbre 51 et l'organe 23 lorsque la transmission est en configuration de synchronisation. En configuration de synchronisation, les organes d'entrées 13 et 23 sont donc mutuellement assujettis en rotation par l'arbre 51, de sorte que le roulage des deux trains 10 et 20 ne s'effectue pas l'un sans l'autre et s'effectue à la même vitesse.

En configuration de désynchronisation, l'embrayage 53 est débrayé, de façon à rendre l'arbre 51 et l'organe 23 mécaniquement indépendants, c'est-à-dire, pour le moins, à les libérer en rotation l'un de l'autre. En configuration de désynchronisation, l'arbre 51 est donc totalement désolidarisé du roulage des trains 10 et 20. Les organes d'entrée 13 et 23 sont alors mécaniquement totalement indépendantes. Plus généralement, en configuration de désynchronisation, les organes d'entrée 13 et 23 sont libérés en rotation l'un de l'autre, c'est-à-dire notamment qu'ils ont la possibilité de tourner l'un sans l'autre.

Dans le cas où les deux embrayages 52 et 53 sont prévus, on prévoit avantageusement qu'ils sont tous deux embrayés en configuration de synchronisation, et tous deux débrayés en configuration de désynchronisation. L'embrayage et le débrayage des embrayages 52 et 53 est avantageusement effectué simultanément. Le fait de prévoir l'arbre de transmission 51 permet de disposer les organes 13 et 23, et plus généralement, les trains roulants 10 et 20, à une distance élevée le long de l'axe X1. Toutefois, l'arbre 51 est entièrement désaccouplé des organes 13 et 23 en configuration de désynchronisation, de sorte à ne pas être inutilement entraîné en rotation lors du roulage.

De préférence, l'unité de commande 60 commande automatiquement la mise en configuration de synchronisation et en configuration de désynchronisation en commandant les embrayages 52 et 53. Pour cela, chaque embrayage 52 et 53 porte un actionneur respectif, cet actionneur étant commandé par l'unité de commande 60 en fonction du programme informatique exécuté par le processeur.

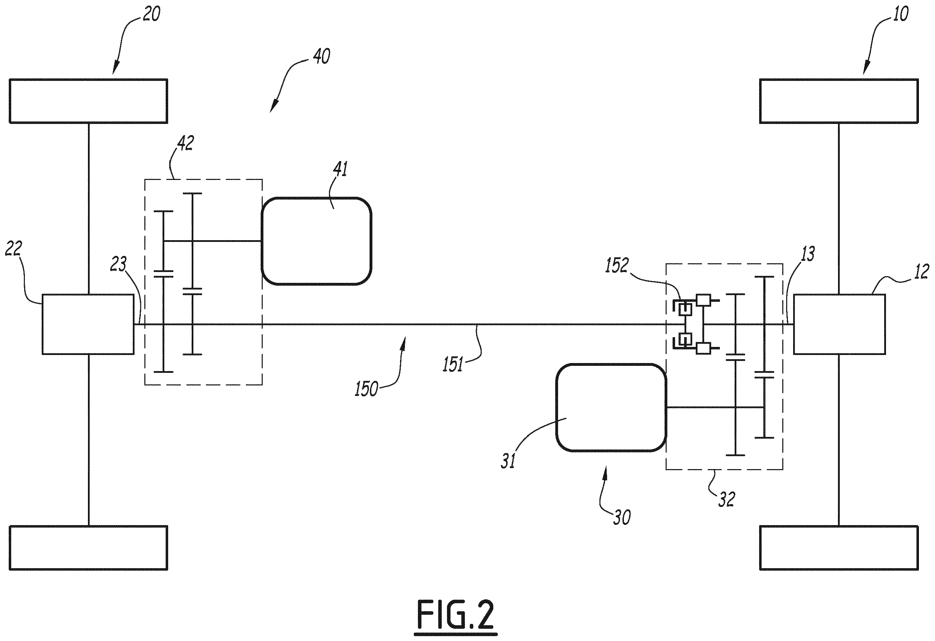

La figure 2 illustre un véhicule qui est entièrement identique au véhicule de la figure 1, hormis en ce que le véhicule de la figure 2 comprend une transmission 150, à la place de la transmission 50. Tout comme la transmission 50, la transmission 150 est configurée pour adopter une configuration de synchronisation et une configuration de désynchronisation des trains roulants 10 et 20. La transmission 150 comprend un seul embrayage 152, qui connecte directement l'organe 13 et l'organe 23. Cet embrayage 152 est préférentiellement un embrayage à crabots. La transmission 150 comprend de préférence un arbre de transmission longitudinal 151, rotatif sur lui-même par rapport au châssis.

Dans le présent exemple, l'embrayage 152 relie une extrémité arrière de l'organe 13 à une extrémité avant de l'arbre 151, l'embrayage 152 étant disposé à proximité ou dans le groupe 30. L'arbre 151 relie l'embrayage 152 à l'organe 23. Dans le cas de la figure 2, l'unique embrayage 152 de la transmission 150 est embrayé en configuration de synchronisation, de sorte à accoupler les organes 13 et 23 en rotation, et débrayé en configuration de désynchronisation, de sorte à découpler les organes 13 et 23. En d'autres termes, en configuration de synchronisation, cet unique embrayage assujettit mutuellement en rotation l'organe d'entrée 13 du train roulant 10 avec l'organe d'entrée 23 du train roulant 20, et qui, en configuration de désynchronisation, libère en rotation l'un de l'autre les organes 13 et 23. Ici également, l'unique embrayage peut être commandé automatiquement par l'unité de commande 60.

En variante, cet unique embrayage 152 pourrait être placé au niveau du groupe 40 plutôt qu'au niveau du groupe 30. Dans ce cas, on prévoit que l'arbre 151 relie l'embrayage 152 au groupe 30.

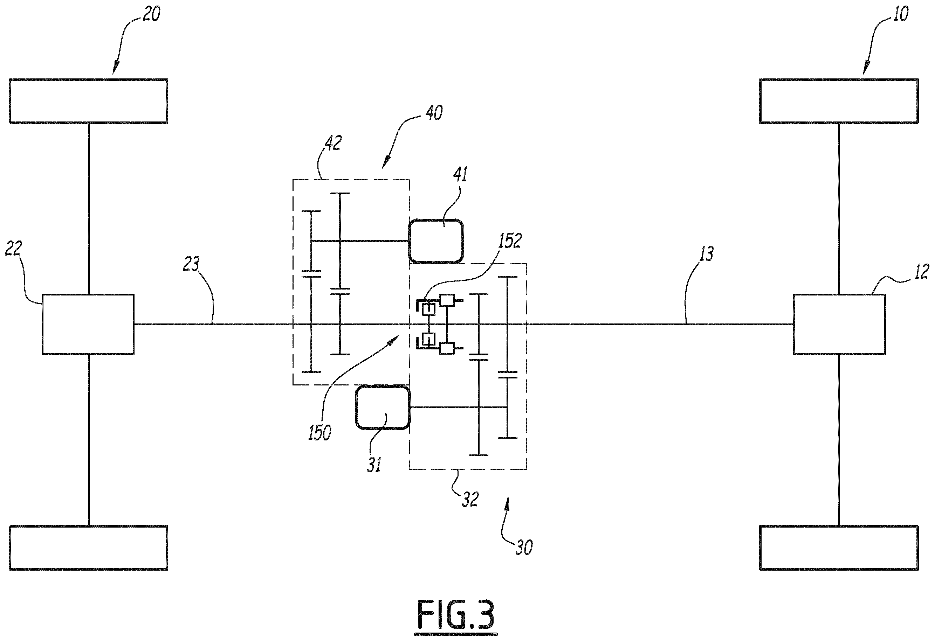

La figure 3 illustre un véhicule qui est entièrement identique au véhicule de la figure 2, hormis que les groupes 30 et 40 de ce véhicule de la figure 3 sont centrés sur le châssis du véhicule, par exemple à mi-chemin entre les trains roulants 10 et 20. En d'autres termes, les groupes 30 et 40 sont disposés de façon groupée, rapprochés l'un de l'autre. Cette disposition évite de prévoir un arbre de transmission 51 ou 151 pour relier les groupes 30 et 40 entre eux. En effet, l'embrayage 152 est logé au sein du groupe 30 ou du groupe 40, et est connecté directement à l'organe 13 et à l'organe 23. L'un des groupes 30 et 40, ou les deux, étant distant de son train roulant 10 ou 20 associé, on prévoit que les organes 13 et/ou 23 sont plus allongés.

En variante, en remplacement de la transmission 50, on pourrait prévoir une transmission hydrostatique, plutôt que mécanique, à condition que la transmission hydrostatique puisse adopter une configuration de synchronisation, dans laquelle la transmission assujettit mutuellement en rotation l'organe d'entrée respectif des trains roulants, et une configuration de désynchronisation, dans laquelle la transmission libère en rotation ces organes d'entrée l'un de l'autre. Par exemple, une telle transmission hydrostatique comprend deux pompes hydrauliques réversibles, à cylindrées fixe ou variable, interconnectées par un circuit hydraulique, chacune de ces pompes étant actionnée par l'un des organes 13 et 23.

Quel que soit le mode de réalisation mis en oeuvre pour la transmission et pour la position des groupes moteurs 30 et 40, on prévoit avantageusement que l'organe 13 et l'organe 23 présentent la même vitesse de rotation lorsque la transmission est en configuration de synchronisation, c'est-à-dire que les vitesses de rotation sont égales, de façon à entraîner les trains roulants 10 et 20 à la même vitesse de roulage, c'est-à-dire en particulier à entraîner les différentiels 12 et 22 à la même vitesse de rotation.

Les groupes moteurs 30 et 40 sont configurés pour assurer le caractère automobile du véhicule en ce qu'ils sont configurés pour opérer à eux seuls, en combinaison l'un avec l'autre, le roulage du véhicule par l'intermédiaire des trains roulants 10 et 20.

Le groupe moteur 30 est associé au train roulant 10 et est distinct et indépendant du groupe moteur 40.

Le groupe moteur 30 comprend un moteur 31 et une boîte de vitesses 32.

Le moteur 31 est suffisamment puissant pour pouvoir actionner le roulage du véhicule par l'intermédiaire du train roulant 10 en configuration de désynchronisation, ou par l'intermédiaire des trains roulants 10 et 20 en configuration de synchronisation, éventuellement en coopération avec le groupe moteur 40.

Le moteur 31 est préférentiellement un moteur électrique. Cela présente l'avantage de simplifier la commande du moteur 31 et de pouvoir facilement régler son couple et sa vitesse. Dans ce cas, on prévoit avantageusement que le véhicule comprend une réserve d'énergie embarquée, par exemple une batterie. Toutefois, on pourrait prévoir que le moteur 31 est un moteur thermique, alimenté par une réserve de carburant.

De préférence, le moteur 31 est commandé par l'unité de commande 60 montrée sur la figure 1, notamment en fonction de commandes de pilotage actionnées par le pilote du véhicule et en fonction des capteurs équipant le véhicule.

On entend que le groupe moteur 30 est associé au train roulant 10 dans la mesure où, que la transmission 50 soit en configuration de synchronisation ou de désynchronisation, le moteur 31 est configuré pour entraîner l'organe 13 par l'intermédiaire de la boîte de vitesses 32. Pour cela, le moteur 31 comprend un stator fixé au châssis et un rotor configuré pour entraîner l'organe 13 par l'intermédiaire de la boîte de vitesses 32. En configuration de désynchronisation, le moteur 31 ne peut pas entraîner l'organe 23, puisque les organes 13 et 23 sont libérés en rotation l'un de l'autre. En configuration de synchronisation, le moteur 31 est configuré pour entraîner, outre l'organe 13, l'organe 23, puisque les organes 13 et 23 sont assujettis en rotation.

De préférence, la boîte de vitesses 32 présente une configuration d'entraînement et une configuration de changement de rapports. Il est possible d'adopter indifféremment la configuration d'entraînement et la configuration de changement de rapports, que la transmission 50 soit en configuration de synchronisation ou de désynchronisation.

En configuration d'entraînement, la boîte de vitesses 32 assujettit mutuellement en rotation le moteur 31 et l'organe d'entrée 13, avec un rapport de réduction choisi. Dans cette configuration, la boîte de vitesses 32 est conçue pour appliquer sélectivement un rapport de réduction parmi au moins deux rapports de réductions possibles. Autrement dit, la boîte de vitesses 32 présente au moins deux vitesses. Alternativement, la boîte de vitesses 32 présente trois ou davantage de vitesses. Dans cette configuration d'entraînement, le moteur 31 peut entraîner en rotation l'organe 13, ou même, en configuration de synchronisation, les organes 13 et 23.

Pour changer de rapport de réduction, c'est-à-dire changer de vitesse, la boîte de vitesses 32 adopte la configuration de changement de rapport, qui est une configuration transitoire. Dans cette configuration de changement de rapport, la boîte de vitesses 32 libère temporairement en rotation l'un de l'autre le moteur 31 et l'organe 13 pour pouvoir, en interne, changer de rapport de réduction. Dans cette configuration de changement de rapport, le moteur 31 ne peut plus entraîner les organes 13 et 23.

De préférence, la boîte de vitesses 32 est une boîte à commande automatique qui est commandée par l'unité de commande 60, au moins en ce qui concerne son basculement entre la configuration d'entraînement et la configuration de changement de rapport, voire également en ce qui concerne l'application sélective d'un rapport donné. En configuration de synchronisation, le choix du rapport de réduction engagé dépend essentiellement de la vitesse de rotation et du couple à appliquer sur l'organe 13. En configuration de désynchronisation, le choix du rapport de réduction engagé dépend essentiellement de la somme des couples à appliquer sur les organes 13 et 23 et de la vitesse de rotation à appliquer sur les organes 13 et 23.

Plus en détails, la boîte de vitesses 32 comprend par exemple un arbre primaire 33, un embrayage 34, appelé ici « embrayage de boîte », un arbre secondaire 35 et un jeu de réducteurs mécaniques 36 et 37. De préférence, cet embrayage 34 est commandé par l'unité 60.

En configuration d'entraînement, l'embrayage 34 assujettit mutuellement en rotation le moteur 31, ou plus précisément le rotor du moteur 31, et l'arbre primaire 33. En configuration de changement de rapport, l'embrayage 34 libère en rotation l'un de l'autre le moteur 31 et l'arbre primaire 33.

L'arbre secondaire 35 et l'organe d'entrée 13 sont mutuellement assujettis en rotation, ici en étant confondus pour des questions de gain de place. On pourrait toutefois prévoir que l'arbre secondaire 35 et l'organe 13 sont des éléments distincts et mutuellement assujettis en rotation, par exemple à l'aide d'un réducteur ou d'un train d'engrenage.

Le jeu de réducteurs mécaniques comprend autant de réducteurs mécaniques que nécessaire, correspondant au nombre de vitesses de la boîte de vitesses. Les réducteurs mécaniques 36 et 37 sont des trains d'engrenages. En configuration d'entraînement, l'un des réducteurs mécaniques 36 ou 37 assujettit mutuellement en rotation les arbres 33 et 35, selon le rapport de réduction souhaité. En configuration de changement de rapport, pour changer de rapport de vitesse, on désengage le réducteur mécanique 36 qui assujettissait mutuellement en rotation les arbres 33 et 35, puis engage un autre réducteur mécanique du jeu, ici le réducteur 37, de sorte que ce réducteur 37 assujettit alors mutuellement en rotation les arbres 33 et 35. L'engagement et le désengagement des réducteurs est préférentiellement commandé par l'unité 60.

En variante, on peut prévoir que la boîte de vitesses 32 est une boîte de vitesses à variation continue ou une boîte de vitesses à double embrayage.

Le groupe moteur 40 comprend un moteur 41 et une boîte de vitesses 42. Le moteur 41 est distinct et indépendant du moteur 31. La boîte de vitesses 42 est distincte et avantageusement indépendante de la boîte de vitesses 32.

Le moteur 41 est suffisamment puissant pour pouvoir actionner le roulage du véhicule par l'intermédiaire du train roulant 20 en configuration de désynchronisation, ou par l'intermédiaire des trains roulants 10 et 20 en configuration de synchronisation, éventuellement en coopération avec le groupe moteur 30.

Le moteur 41 est préférentiellement un moteur électrique, éventuellement alimenté par la même réserve d'énergie que le moteur 31. Toutefois, on pourrait prévoir que le moteur 41 est un moteur thermique, alimenté par une réserve de carburant.

De préférence, le moteur 41 est commandé par l'unité de commande 60, comme le moteur 31.

On entend que le groupe moteur 40 est associé au train roulant 20 dans la mesure où, que la transmission 50 soit en configuration de synchronisation ou de désynchronisation, le moteur 41 est configuré pour entraîner l'organe 23 par l'intermédiaire de la boîte de vitesses 42. Pour cela, le moteur 41 comprend un stator fixé au châssis et un rotor configuré pour entraîner l'organe 23 par l'intermédiaire de la boîte de vitesses 42. En configuration de désynchronisation, le moteur 41 ne peut pas entraîner l'organe 13, puisque les organes 13 et 23 sont libérés en rotation l'un de l'autre. En configuration de synchronisation, le moteur 31 est configuré pour entraîner, outre l'organe 23, l'organe 13, puisque les organes 13 et 23 sont assujettis en rotation.

De préférence, la boîte de vitesses 42 présente une configuration d'entraînement et une configuration de changement de rapports. Il est possible d'adopter indifféremment la configuration d'entraînement et la configuration de changement de rapports, que la transmission 50 soit en configuration de synchronisation ou de désynchronisation.

En configuration d'entraînement, la boîte de vitesses 42 assujettit mutuellement en rotation le moteur 41 et l'organe d'entrée 23, avec un rapport de réduction choisi. Dans cette configuration, la boîte de vitesses 42 est conçue pour appliquer sélectivement un rapport de réduction parmi au moins deux rapports de réductions possibles. Autrement dit, la boîte de vitesses 42 présente au moins deux vitesses. Alternativement, la boîte de vitesses 42 présente trois ou davantage de vitesses. Dans cette configuration d'entraînement, le moteur 41 peut entraîner en rotation l'organe 23, ou même, en configuration de synchronisation, les organes 13 et 23.

Pour changer de rapport de réduction, c'est-à-dire changer de vitesse, la boîte de vitesses 42 adopte la configuration de changement de rapport, qui est une configuration transitoire. Dans cette configuration de changement de rapport, la boîte de vitesses 42 libère temporairement en rotation l'un de l'autre le moteur 41 et l'organe 23 pour pouvoir, en interne, changer de rapport de réduction. Dans cette configuration de changement de rapport, le moteur 41 ne peut plus entraîner les organes 13 et 23.

De préférence, la boîte de vitesses 42 est une boîte à commande automatique qui est commandée par l'unité de commande 60, comme la boîte de vitesses 32.

Plus en détails, la boîte de vitesses 42 comprend par exemple un arbre primaire 43, un embrayage 44, appelé ici « embrayage de boîte », un arbre secondaire 45 et un jeu de réducteurs mécaniques 46 et 47.

En configuration d'entraînement, l'embrayage 44 assujettit mutuellement en rotation le moteur 41, ou plus précisément le rotor du moteur 41, et l'arbre primaire 43. En configuration de changement de rapport, l'embrayage 44 libère en rotation l'un de l'autre le moteur 41 et l'arbre primaire 43. De préférence, cet embrayage 44 est commandé par l'unité 60.

L'arbre secondaire 45 et l'organe d'entrée 23 sont mutuellement assujettis en rotation, ici en étant confondus pour des questions de gain de place. On pourrait toutefois prévoir que l'arbre secondaire 45 et l'organe 23 sont des éléments distincts et mutuellement assujettis en rotation, par exemple à l'aide d'un réducteur ou d'un train d'engrenage.

Le jeu de réducteurs mécaniques comprend autant de réducteurs mécaniques que nécessaire, correspondant au nombre de vitesses de la boîte de vitesses. Les réducteurs mécaniques 46 et 47 sont des trains d'engrenages. En configuration d'entraînement, l'un des réducteurs mécaniques 46 ou 47 assujettit mutuellement en rotation les arbres 43 et 45, selon le rapport de réduction souhaité. En configuration de changement de rapport, pour changer de rapport de vitesse, on désengage le réducteur mécanique 46 qui assujettissait mutuellement en rotation les arbres 43 et 45, puis on engage un autre réducteur mécanique du jeu, ici le réducteur 47, de sorte que ce réducteur 47 assujettit alors mutuellement en rotation les arbres 43 et 45. L'engagement et le désengagement des réducteurs est préférentiellement commandé par l'unité 60.

En variante, la boîte de vitesses 42 peut être une boîte de vitesses à variation continue ou une boîte de vitesses à double embrayage.

Le véhicule décrit ci-avant peut être utilisé de nombreuses façons. Certaines utilisations particulières sont décrites ci-dessous. Par « utilisation », on entend un procédé de pilotage du véhicule, incluant notamment la commande de ses différents composants durant la conduite.

Dans l'utilisation du véhicule, on prévoit que le véhicule est mis en configuration de synchronisation lorsque le véhicule automobile effectue une conduite hors route, une conduite tout-terrain, ou une conduite visant à franchir un obstacle, et est mis en configuration de désynchronisation lorsque le véhicule automobile effectue une conduite sur route ou une conduite à haute vitesse, par exemple au-dessus de 30 km/h.

De préférence, le véhicule dispose d'une commande de conduite, à disposition du pilote, par l'intermédiaire de laquelle le pilote indique si une conduite sur route ou hors route est souhaitée. En fonction de cette commande de conduite, l'unité 60 met le véhicule en configuration de synchronisation ou de désynchronisation. Toutefois, on peut prévoir que l'unité 60 choisit automatiquement de mettre le véhicule en configuration de synchronisation ou de désynchronisation, selon les informations fournies par des capteurs équipant le véhicule, et déterminant par exemple la vitesse du véhicule, le fait que l'un des trains 10 et 20 soit en patinage ou en adhérence.

En configuration de synchronisation, le véhicule est plutôt adapté pour une conduite hors route, la puissance mécanique générée par les groupes moteurs 30 et 40 étant transmise de façon combinée et indistincte aux trains roulants 10 et 20, qui sont mécaniquement interconnectés par la transmission 50. Dans cette situation, la puissance motrice est fournie sans distribution, et de façon indistincte, aux deux trains roulants 10 et 20. Ainsi, même si le premier train roulant n'est pas en contact avec le sol, ou est en contact sans adhérence avec le sol, l'intégralité du couple moteur généré par les groupes moteurs 30 et 40 entraîne, en s'additionnant, les trains roulants 10 et 20.

En configuration de synchronisation, si l'un des deux groupes moteurs 30 et 40 est en panne ou ne génère pas de couple, l'autre groupe moteur peut tout de même entraîner les deux trains roulants 10 et 20 à la fois.

La configuration de synchronisation permet au véhicule de franchir efficacement un obstacle, qui peut par exemple consister à devoir rouler sur une pente présentant une forte inclinaison en montée. En configuration de synchronisation, le couple généré par les groupes moteurs 30 et 40 se répartit alors naturellement majoritairement sur le train roulant avant 10 plutôt que sur le train arrière 20, du fait même de l'inclinaison en montée. Le franchissement d'obstacle est donc grandement facilité. Le fait que le couple généré par les deux groupes moteurs 30 et 40 se répartit naturellement sur le train roulant 10 permet un dimensionnement moindre des moteurs 31 et 41.

En configuration de désynchronisation, le véhicule est plutôt adapté pour une conduite sur route ou une conduite à haute vitesse, puisque les trains 10 et 20 sont mécaniquement libérés l'un de l'autre pour leur roulage. Dans cette situation, le groupe moteur 30 peut seulement agir sur le train roulant 10 et le groupe moteur 40 peut seulement agir sur le train roulant 20. Si l'on souhaite actionner les deux groupes moteurs 30 et 40 à la fois dans cette configuration de désynchronisation, on prévoit avantageusement que les groupes moteurs 30 et 40 sont régulés par l'unité de commande 60, par exemple en fonction d'une commande d'accélération du pilote, afin de s'assurer que les trains roulants 10 et 20 sont actionnés avec une même vitesse de roulage. Pour cela, le véhicule est avantageusement équipé de tout capteurs appropriés, dont les informations sont utilisées par l'unité de commande 60, notamment des capteurs de vitesse de rotation des organes 13 et 23 ou des roues 11 et 21. L'unité de commande 60 assure alors avantageusement le rôle d'une simulation de différentiel mécanique entre les trains 10 et 20, par un pilotage des groupes moteurs 30 et 40, cela alors que les trains 10 et 20 sont mécaniquement indépendants.

On peut aussi prévoir que l'unité de commande 60 commande aux groupes moteurs 30 et 40 d'appliquer des couples différents et/ou des vitesses de rotation différentes aux trains roulants 10 et 20, afin de s'adapter à des situations de conduite particulières.

Plus généralement, si l'on prévoit un actionnement simultané des deux groupes moteurs 30 et 40 en configuration désynchronisée, on prévoit avantageusement que l'unité de commande 60 pilote les groupes moteurs 30 et 40 pour s'adapter à la situation de conduite, en particulier en pilotant leur vitesse et/ou leur couple généré respectifs.

Dans la configuration de désynchronisation, on peut prévoir d'utiliser par exemple seulement l'un des groupes moteurs 30 et 40, pour mettre le véhicule en traction ou en propulsion pure.

De façon additionnelle ou indépendante des utilisations mentionnées ci-dessus, le fait de mettre en oeuvre la configuration de synchronisation, même temporairement, ouvre la possibilité d'obtenir une conduite sans rupture du couple moteur entraînant les trains 10 et 20. En particulier, en configuration de synchronisation, les deux trains roulants 10 et 20 sont en permanence actionnés par au moins l'un des deux groupes moteurs 30 et 40, même si l'autre groupe moteur ne fournit temporairement pas de couple, par exemple durant un changement de rapport de boîte de vitesses de cet autre groupe moteur.

Pour opérer un changement de rapport de l'une des boîtes de vitesses 32 et 42, on met en oeuvre une séquence particulière. Cette séquence vise à obtenir qu'un couple moteur, de préférence sensiblement constant, soit toujours appliqué pour le roulage des trains roulants 10 et 20, malgré la nécessité des boîtes de vitesses 32 et 42 à passer temporairement en configuration de changement de rapport. En effet, on a vu que, en configuration de changement de rapport, chaque boîte de vitesses 32 et 42 libère temporairement en rotation le moteur 31 ou 41 associé, vis-à-vis de l'organe 13 ou 23 du train roulant 10 et 20 associé.

Pour cela, on prévoit successivement une étape A, une étape B et une étape C définies ci-dessous. Dans ces étapes, les groupes moteurs 30 et 40 sont avantageusement commandés par l'unité de commande 60.

Dans une situation initiale, au moins le groupe moteur 30, voire les deux groupes moteurs 30 et 40, génèrent un couple moteur pour mettre le véhicule en roulage par l'intermédiaire du train 10 ou des trains 10 et 20. Dans cette situation initiale, les boîtes de vitesses 32 et 42 sont en configuration d'entraînement. Dans l'étape A, alors que les boîtes de vitesses 32 et 42 sont encore en configuration d'entraînement, on met la transmission 50 en configuration de synchronisation, si elle était en configuration de désynchronisation. Si la transmission 50 était déjà en configuration de synchronisation, on se contente de la maintenir en configuration de synchronisation. Dans l'étape B, on met la boîte de vitesses 42 en configuration de changement de rapport et on lui fait changer de rapport, tout en maintenant la configuration de synchronisation et tout en maintenant la boîte de vitesses 32 en configuration d'entraînement. Dans cette étape B, on s'assure que le groupe moteur 30 génère un couple moteur pour pallier à l'absence de couple moteur du groupe moteur 40.

Lors de l'étape C, une fois le changement de rapport effectué par la boîte de vitesses 42, on met à nouveau la boîte de vitesses 42 en configuration d'entraînement alors que la transmission 50 est maintenue en configuration de synchronisation et que la boîte de vitesses 32 est maintenue en configuration d'entraînement. Dès lors, on peut librement maintenir la configuration de synchronisation, ou alors passer ou repasser en configuration de désynchronisation, pour retrouver, si on le souhaite, la situation initiale.

Si le moteur 31 est un moteur électrique et que, préalablement à l'étape A et pendant l'étape A les deux groupes moteurs génèrent un couple moteur pour actionner les trains roulants en roulage, on peut avantageusement prévoir d'effectuer une suralimentation de ce moteur 31 en énergie électrique, seulement pendant l'étape B, pour que le moteur 31 génère à lui seul la même puissance mécanique que les deux moteurs 31 et 41 généraient pendant l'étape A et au préalable. Par « suralimentation », on entend préférentiellement que le moteur 31 reçoit par exemple le double de la puissance électrique qui serait reçue dans une utilisation nominale du moteur 31. Pour le moins, la suralimentation consiste à augmenter l'alimentation du moteur 31 par rapport à l'alimentation qui lui était fournie au préalable. Cette suralimentation augmente temporairement le couple généré par le moteur 41 au-delà de la valeur nominale. L'étape B étant d'une durée relativement faible, le moteur 41 résiste à cette suralimentation temporaire et génère à lui seul la puissance mécanique que les deux moteurs 31 et 41 auraient généré de façon combinée sans suralimentation. Ainsi, les trains roulants 10 et 20 reçoivent un couple moteur constant malgré le changement de rapport de la boîte de vitesses 42. En d'autres termes, le groupe moteur 30 compense, c'est-à-dire prend le relais sur, le deuxième groupe moteur 40, pour lequel la mise en configuration de changement de rapport a libéré temporairement en rotation le moteur 41 de l'organe d'entrée 23.

Les étapes A, B et C décrites ci-dessus permettent d'effectuer un changement de rapport pour la boîte de vitesses 42. Les étapes A, B et C s'appliquent également pour effectuer un changement de rapport pour la boîte de vitesses 32, le groupe moteur 40 étant alors actionné durant l'étape B pour palier à l'absence de couple moteur du groupe moteur 30.

Si l'on souhaite changer de rapport pour les deux boîtes de vitesses, on met en oeuvre la séquence des étapes A, B et C pour la première boîte de vitesse, et ensuite la séquence des étapes A, B et C pour la deuxième boîte de vitesse.

En variante, pour certaines applications, on prévoit que le changement de vitesse des groupes moteurs 30 et 40 est effectué en configuration désynchronisée sans passer en configuration de synchronisation.

En variante, le véhicule comprend un ou plusieurs trains roulants additionnels, et autant de groupes moteurs. Alors, on prévoit avantageusement que la transmission est configurée pour adopter une configuration de synchronisation dans laquelle la transmission assujettit mutuellement en rotation l'organe d'entrée de tous les trains roulants à la fois, et pour adopter une configuration de désynchronisation dans laquelle la transmission libère en rotation l'un de l'autre tous les trains roulants à la fois.

En variante, on pourrait prévoir que la transmission assujettit mutuellement en rotation l'organe d'entrée d'un premier train roulant et l'organe d'entrée d'un deuxième train roulant, alors que le premier train roulant est un train roulant de gauche, par exemple une roue gauche, et que le deuxième train roulant est un train roulant de droite, par exemple une roue droite. Dans ce cas, le premier groupe moteur est associé au train roulant de gauche pour son roulage, alors que le deuxième groupe moteur est associé au train roulant de droite pour son roulage. Lorsque la transmission est en configuration de synchronisation, la transmission assujettit mutuellement en rotation l'organe d'entrée du train roulant de gauche et l'organe d'entrée du train roulant de droite. En configuration de désynchronisation, la transmission libère en rotation l'un de l'autre l'organe d'entrée du train roulant de gauche et l'organe d'entrée du train roulant de droite.

Chaque caractéristique d'un mode de réalisation ou variante décrit dans ce qui précède peut être mise en oeuvre dans les autres modes de réalisation et variantes décrits dans ce qui précède, pour autant que cela est techniquement admissible, et reste dans l'objet défini par les revendications.

## Revendications

1. Véhicule automobile comprenant :
• un premier train roulant (10) et un deuxième train roulant (20), chaque train roulant (10, 20) supportant le véhicule et comprenant un organe d'entrée (13, 23) individuel, pour l'entraînement en roulage dudit train roulant (10, 20) lorsque ledit organe d'entrée (13, 23) est entraîné en rotation, et
• une transmission (50; 150), qui est configurée pour assujettir mutuellement en rotation l'organe d'entrée (13) du premier train roulant (10) et l'organe d'entrée (23) du deuxième train roulant (20) ;
dans lequel :
• le véhicule automobile comprend un premier groupe moteur (30), associé au premier train roulant (10), et un deuxième groupe moteur (40), associé au deuxième train roulant (20), chaque groupe moteur (30, 40) comprenant un moteur (31, 41) individuel ; et
• la transmission (50; 150) est configurée pour adopter alternativement :
◆ une configuration de synchronisation, dans laquelle la transmission (50; 150) assujettit mutuellement en rotation l'organe d'entrée (13) du premier train roulant (10) et l'organe d'entrée (23) du deuxième train roulant (20) ; et
◆ une configuration de désynchronisation, dans laquelle la transmission (50; 150) libère en rotation l'un de l'autre l'organe d'entrée (13) du premier train roulant (10) et l'organe d'entrée (23) du deuxième train roulant (20) ;
**caractérisé en ce que** chaque groupe moteur (30, 40) comprend une boîte de vitesses (32, 42) individuelle, la boîte de vitesses (32, 42) étant configurée pour mutuellement assujettir en rotation le moteur (31, 41) dudit groupe moteur (30, 40) et l'organe d'entrée (13, 23) du train roulant (10, 20) auquel ledit groupe moteur (30, 40) est associé.

2. Véhicule selon la revendication 1, dans lequel la transmission (50; 150) est configurée pour que, lorsque la transmission (50; 150) est en configuration de synchronisation, la vitesse de rotation de l'organe d'entrée (13) du premier train roulant (10) est égale à la vitesse de rotation de l'organe d'entrée (23) du deuxième train roulant (20).

3. Véhicule selon l'une quelconque des revendications précédentes, dans lequel la transmission (50; 150) comprend au moins un embrayage (52, 53 ; 152), qui, en configuration de synchronisation, assujettit mutuellement en rotation l'organe d'entrée (13) du premier train roulant (10) avec l'organe d'entrée (23) du deuxième train roulant (20), et qui, en configuration de désynchronisation, libère en rotation l'un de l'autre l'organe d'entrée (13) du premier train roulant (10) et l'organe d'entrée (23) du deuxième train roulant (20).

4. Véhicule selon l'une quelconque des revendications précédentes, dans lequel :
• le premier train roulant (10) constitue un train roulant avant du véhicule ;
• le deuxième train roulant (20) constitue un train roulant arrière du véhicule ; et
• la transmission (50) comprend :
◆ un arbre de transmission longitudinal (51),
◆ un embrayage avant (52), qui :
◊ en configuration de synchronisation, assujettit mutuellement en rotation l'arbre de transmission longitudinal (51) et l'organe d'entrée (13) du premier train roulant (10) ; et
◊ en configuration de désynchronisation, libère en rotation l'un de l'autre l'arbre de transmission longitudinal (51) et l'organe d'entrée (13) du premier train roulant (10) ; et
◆ un embrayage arrière (53), qui :
◊ en configuration de synchronisation, assujettit mutuellement en rotation l'arbre de transmission longitudinal (51) et l'organe d'entrée (23) du deuxième train roulant (20) ; et
◊ en configuration de désynchronisation, libère en rotation l'un de l'autre l'arbre de transmission longitudinal (51) et l'organe d'entrée (23) du deuxième train roulant (20).

5. Véhicule selon la revendication 4, dans lequel l'embrayage avant (52) et l'embrayage arrière (53) sont des embrayages à crabots.

6. Véhicule selon l'une quelconque des revendications précédentes, dans lequel chaque train roulant (10, 20) constitue un essieu respectif du véhicule et comprend :
• deux roues (11, 21) supportant le véhicule et par l'intermédiaire desquelles le roulage du véhicule peut être opéré ; et
• un différentiel (12, 22), actionné par l'organe d'entrée (13, 23) dudit train roulant (10, 20) et distribuant aux deux roues (11,21) dudit train roulant (10, 20) l'entraînement en rotation reçu audit organe d'entrée (13, 23).

7. Véhicule selon l'une quelconque des revendications précédentes, dans lequel, pour chaque groupe moteur (30, 40), la boîte de vitesses (32, 42) présente :
• une configuration d'entraînement, dans laquelle la boîte de vitesses (32, 42) assujettit mutuellement en rotation le moteur (31, 41) dudit groupe moteur (30, 40) et l'organe d'entrée (13, 23) du train roulant (10, 20) associé audit groupe moteur (30, 40), la configuration d'entraînement pouvant être adoptée indépendamment du fait que la transmission (50; 150) soit en configuration de synchronisation ou en configuration de désynchronisation ; et
• une configuration de changement de rapport, dans laquelle, pour effectuer un changement de rapport, la boîte de vitesses (32, 42) libère en rotation l'un de l'autre le moteur (31, 41) dudit groupe moteur (30, 40) et l'organe d'entrée (13, 23) du train roulant (10, 20) associé audit groupe moteur (30, 40), la configuration de changement de rapport pouvant être adoptée indépendamment du fait que la transmission (50; 150) soit en configuration de synchronisation ou en configuration de désynchronisation.

8. Utilisation d'un véhicule automobile conforme à l'une quelconque des revendications précédentes, l'utilisation comprenant :
• une mise en configuration de synchronisation de la transmission (50; 150) lorsque le véhicule automobile effectue une conduite hors route, une conduite tout-terrain, ou une conduite visant à franchir un obstacle ; et
• une mise en configuration de désynchronisation de la transmission (50; 150) lorsque le véhicule automobile effectue une conduite sur route ou une conduite à haute vitesse.

9. Utilisation d'un véhicule automobile conforme à la revendication 7, l'utilisation comprenant :
• une étape A : mettre ou maintenir la transmission (50; 150) en configuration de synchronisation, alors que les boîtes de vitesses (32, 42) respectives du premier groupe moteur (30) et du deuxième groupe moteur (40) sont en configuration d'entraînement ; puis
• une étape B : mettre la boîte de vitesses (42) du deuxième groupe moteur (40) en configuration de changement de rapport, alors que la transmission (50; 150) est maintenue en configuration de synchronisation et que la boîte de vitesses (32) du premier groupe moteur (30) est maintenue en configuration d'entraînement ; puis
• une étape C : mettre la boîte de vitesses (42) du deuxième groupe moteur (40) à nouveau en configuration d'entraînement alors que la transmission (50; 150) est maintenue en configuration de synchronisation et que la boîte de vitesses (32) du premier groupe moteur (30) est maintenue en configuration d'entraînement.

10. Utilisation selon la revendication 9, dans laquelle :
• chaque moteur (31, 41) est un moteur électrique ; et
• l'étape B comprend de suralimenter le moteur (31) du premier groupe moteur (30) en énergie électrique, comparativement à l'alimentation électrique fournie au moteur (31) du premier groupe moteur (30) durant l'étape A, afin de compenser la libération en rotation l'un de l'autre du moteur (41) du deuxième groupe moteur (40) et de l'organe d'entrée (23) du deuxième train roulant (20).

## Patentansprüche

1. Kraftfahrzeug, umfassend:
• ein erstes Fahrwerk (10) und ein zweites Fahrwerk (20), wobei jedes Fahrwerk (10, 20) das Fahrzeug trägt und ein individuelles Eingangselement (13, 23) für den Fahrantrieb des Fahrwerks (10, 20) umfasst, wenn das Eingangselement (13, 23) rotatorisch angetrieben wird, und
• eine Übertragung (50; 150), die ausgelegt ist, um das Eingangselement (13) des ersten Fahrwerks (10) und das Eingangselement (23) des zweiten Fahrwerks (20) gegenseitig rotatorisch zu verbinden;
wobei:
• das Kraftfahrzeug eine erste Antriebseinheit (30), die dem ersten Fahrwerk (10) zugeordnet ist, und eine zweite Antriebseinheit (40), die dem zweiten Fahrwerk (20) zugeordnet ist, umfasst, wobei jede Antriebseinheit (30, 40) einen individuellen Motor (31, 41) umfasst; und
• die Übertragung (50; 150) ausgelegt ist, um alternativ anzunehmen:
◆ eine Synchronisationskonfiguration, in der die Übertragung (50; 150) das Eingangselement (13) des ersten Fahrwerks (10) und das Eingangselement (23) des zweiten Fahrwerks (20) gegenseitig rotatorisch verbindet; und
◆ eine Desynchronisationskonfiguration, in der die Übertragung (50; 150) das Eingangselement (13) des ersten Fahrwerks (10) und das Eingangselement (23) des zweiten Fahrwerks (20) rotatorisch voneinander löst;
**dadurch gekennzeichnet, dass** jede Antriebseinheit (30, 40) ein individuelles Getriebe (32, 42) umfasst, wobei das Getriebe (32, 42) ausgelegt ist, um den Motor (31, 41) der Antriebseinheit (30, 40) und das Eingangselement (13, 23) des Fahrwerks (10, 20), dem die Antriebseinheit (30, 40) zugeordnet ist, gegenseitig rotatorisch zu verbinden.

2. Fahrzeug nach Anspruch 1, wobei die Übertragung (50; 150) derart ausgelegt ist, dass, wenn sich die Übertragung (50; 150) in Synchronisationskonfiguration befindet, die Rotationsgeschwindigkeit des Eingangselements (13) des ersten Fahrwerks (10) gleich der Rotationsgeschwindigkeit des Eingangselements (23) des zweiten Fahrwerks (20) ist.

3. Fahrzeug nach einem der vorhergehenden Ansprüche, wobei die Übertragung (50; 150) mindestens eine Kupplung (52, 53; 152) umfasst, die in Synchronisationskonfiguration das Eingangselement (13) des ersten Fahrwerks (10) mit dem Eingangselement (23) des zweiten Fahrwerks (20) gegenseitig rotatorisch verbindet, und die in Desynchronisationskonfiguration das Eingangselement (13) des ersten Fahrwerks (10) und das Eingangselement (23) des zweiten Fahrwerks (20) rotatorisch voneinander löst.

4. Fahrzeug nach einem der vorhergehenden Ansprüche, wobei:
• das erste Fahrwerk (10) ein vorderes Fahrwerk des Fahrzeugs bildet;
• das zweite Fahrwerk (20) ein hinteres Fahrwerk des Fahrzeugs bildet; und
• die Übertragung (50) umfasst:
◆ eine Längsübertragungswelle (51),
◆ eine vordere Kupplung (52), die:
◊ in Synchronisationskonfiguration die Längsübertragungswelle (51) und das Eingangselement (13) des ersten Fahrwerks (10) gegenseitig rotatorisch verbindet; und
◊ in Desynchronisationskonfiguration die Längsübertragungswelle (51) und das Eingangselement (13) des ersten Fahrwerks (10) rotatorisch voneinander löst; und
◆ eine hintere Kupplung (53), die:
◊ in Synchronisationskonfiguration die Längsübertragungswelle (51) und das Eingangselement (23) des zweiten Fahrwerks (20) gegenseitig rotatorisch verbindet; und
o in Desynchronisationskonfiguration die Längsübertragungswelle (51) und das Eingangselement (23) des zweiten Fahrwerks (20) rotatorisch voneinander löst.

5. Fahrzeug nach Anspruch 4, wobei die vordere Kupplung (52) und die hintere Kupplung (53) Klauenkupplungen sind.

6. Fahrzeug nach einem der vorhergehenden Ansprüche, wobei jedes Fahrwerk (10, 20) eine jeweilige Achse des Fahrzeugs bildet und umfasst:
• zwei Räder (11, 21), die das Fahrzeug tragen und über die das Fahrzeug gefahren werden kann; und
• ein Differential (12, 22), das durch das Eingangselement (13, 23) des Fahrwerks (10, 20) betätigt wird und den von dem Eingangselement (13, 23) empfangenen Rotationsantrieb auf die beiden Räder (11, 21) des Fahrwerks (10, 20) verteilt.

7. Fahrzeug nach einem der vorhergehenden Ansprüche, wobei das Getriebe (32, 42) für jede Antriebseinheit (30, 40) aufweist:
• eine Antriebskonfiguration, in der das Getriebe (32, 42) den Motor (31, 41) der Antriebseinheit (30, 40) und das Eingangselement (13, 23) des Fahrwerks (10, 20), das der Antriebseinheit (30, 40) zugeordnet ist, gegenseitig rotatorisch verbindet, wobei die Antriebskonfiguration unabhängig davon angenommen werden kann, ob sich die Übertragung (50; 150) in Synchronisationskonfiguration oder Desynchronisationskonfiguration befindet; und
• eine Schaltkonfiguration, in der das Getriebe (32, 42) zur Durchführung eines Gangwechsels den Motor (31, 41) der Antriebseinheit (30, 40) und das Eingangselement (13, 23) des Fahrwerks (10, 20), das der Antriebseinheit (30, 40) zugeordnet ist, voneinander rotatorisch löst, wobei die Schaltkonfiguration unabhängig davon eingenommen werden kann, ob sich die Übertragung (50; 150) in Synchronisationskonfiguration oder Desynchronisationskonfiguration befindet.

8. Verwendung eines Kraftfahrzeugs nach einem der vorhergehenden Ansprüche, wobei die Verwendung umfasst:
• ein Versetzen der Übertragung (50; 150) in Synchronisationskonfiguration, wenn das Kraftfahrzeug eine Offroad-Fahrt, eine Geländefahrt oder eine Fahrt zum Überwinden eines Hindernisses durchführt; und
• ein Versetzen der Übertragung (50; 150) in Desynchronisationskonfiguration, wenn das Kraftfahrzeug eine Straßenfahrt oder eine Fahrt mit hoher Geschwindigkeit durchführt.

9. Verwendung eines Kraftfahrzeugs nach Anspruch 7, wobei die Verwendung umfasst:
• einen Schritt A: Versetzen oder Halten der Übertragung (50; 150) in Synchronisationskonfiguration, während die jeweiligen Getriebe (32, 42) der ersten Antriebseinheit (30) und der zweiten Antriebseinheit (40) in einer Antriebskonfiguration sind; dann
• einen Schritt B: Versetzen des Getriebes (42) der zweiten Antriebseinheit (40) in eine Schaltkonfiguration, während die Übertragung (50; 150) in Synchronisationskonfiguration gehalten wird und das Getriebe (32) der ersten Antriebseinheit (30) in einer Antriebskonfiguration gehalten wird; dann
• einen Schritt C: erneutes Versetzen des Getriebes (42) der zweiten Antriebseinheit (40) in eine Antriebskonfiguration, während die Übertragung (50; 150) in Synchronisationskonfiguration gehalten wird und das Getriebe (32) der ersten Antriebseinheit (30) in einer Antriebskonfiguration gehalten wird.

10. Verwendung nach Anspruch 9, wobei:
• jeder Motor (31, 41) ein Elektromotor ist; und
• der Schritt B die Überversorgung des Motors (31) der ersten Antriebseinheit (30) mit elektrischer Energie im Vergleich zu der elektrischen Versorgung umfasst, die dem Motor (31) der ersten Antriebseinheit (30) während des Schritts A zugeführt wird, um die Rotationsfreigabe des Motors (41) der zweiten Antriebsgruppe (40) und des Eingangselements (23) des zweiten Fahrwerks (20) voneinander zu kompensieren.

## Claims

1. A motor vehicle comprising:
• a first running gear (10) and a second running gear (20), each running gear (10, 20) supporting the vehicle and comprising an individual input member (13, 23) for driving said running gear (10, 20) when said input member (13, 23) is rotated, and
• a transmission (50; 150), which is configured to mutually secure in rotation the input member (13) of the first running gear (10) and the input member (23) of the second running gear (20); wherein:
• the motor vehicle comprises a first power unit (30), associated with the first running gear (10), and a second power unit (40), associated with the second running gear (20), each power unit (30, 40) comprising an individual motor (31, 41); and
• the transmission (50; 150) is configured to adopt alternately:
◆ a synchronisation configuration, in which the transmission (50; 150) mutually secures in rotation the input member (13) of the first running gear (10) and the input member (23) of the second running gear (20); and
◆ a desynchronisation configuration, in which the transmission (50; 150) releases the input member (13) of the first running gear (10) and the input member (23) of the second running gear (20) to rotate freely relative to one another;
**characterised in that** each power unit (30, 40) comprises an individual gearbox (32, 42), the gearbox (32, 42) being configured to mutually secure in rotation the motor (31, 41) of said power unit (30, 40) and the input member (13, 23) of the running gear (10, 20) with which said power unit (30, 40) is associated.

2. The vehicle according to claim 1, wherein the transmission (50; 150) is configured so that, when the transmission (50; 150) is in the synchronisation configuration, the speed of rotation of the input member (13) of the first running gear (10) is equal to the speed of rotation of the input member (23) of the second running gear (20).

3. The vehicle according to any one of the preceding claims, in which the transmission (50; 150) comprises at least one clutch (52, 53; 152) which, in the synchronization configuration, mutually secures in rotation the input member (13) of the first running gear (10) with the input member (23) of the second running gear (20), and which, in the desynchronisation configuration, releases the input member (13) of the first running gear (10) and the input member (23) of the second running gear (20) to rotate freely relative to one another.

4. The vehicle according to one of the preceding claims, wherein:
• the first running gear (10) forms the front running gear of the vehicle;
• the second running gear (20) forms the rear running gear of the vehicle; and
• the transmission (50) comprises:
◆ a longitudinal transmission shaft (51),
◆ a front clutch (52), which:
∘ in the synchronisation configuration, mutually secures in rotation the longitudinal transmission shaft (51) and the input member (13) of the first running gear (10); and
∘ in the desynchronisation configuration, releases the longitudinal transmission shaft (51) and the input member (13) of the first running gear (10) to rotate freely relative to one another; and
◆ a rear clutch (53), which:
∘ in the synchronisation configuration, mutually secures in rotation the longitudinal transmission shaft (51) and the input member (23) of the second running gear (20); and
∘ in the desynchronisation configuration, releases the longitudinal transmission shaft (51) and the input member (23) of the second running gear (20) to rotate freely relative to one another.

5. The vehicle according to claim 4, wherein the front clutch (52) and the rear clutch (53) are dog clutches.

6. The vehicle according to any one of the preceding claims, wherein each running gear (10, 20) constitutes a respective axle of the vehicle and comprises:
• two wheels (11, 21) supporting the vehicle and by means of which the vehicle can be driven; and
• a differential (12, 22), actuated by the input member (13, 23) of said running gear (10, 20) and distributing to the two wheels (11, 21) of said running gear (10, 20) the rotational drive received at said input member (13, 23).

7. The vehicle according to any of the preceding claims, wherein, for each power unit (30, 40), the gearbox (32, 42) has:
• a drive configuration, in which the gearbox (32, 42) mutually secures in rotation the motor (31, 41) of said power unit (30, 40) and the input member (13, 23) of the running gear (10, 20) associated with the said power unit (30, 40), the drive configuration being able to be adopted independently of whether the transmission (50; 150) is in the synchronization configuration or in the desynchronization configuration; and
• a gearshift configuration, in which, to perform a gear shift, the gearbox (32, 42) releases the motor (31, 41) of said power unit (30, 40) and the input member (13, 23) of the running gear (10, 20) associated with said power unit (30, 40) to rotate freely relative to one another, the gearshift configuration being able to be adopted regardless of whether the transmission (50; 150) is in the synchronization configuration or in the desynchronization configuration.

8. A use of a motor vehicle in accordance with any one of the preceding claims, the use comprising:
• setting the transmission (50; 150) to the synchronization configuration when the motor vehicle is driving off-road, in all-terrain conditions, or over an obstacle; and
• setting the transmission (50; 150) to the desynchronization configuration when the motor vehicle is driving on the road or at high speed.

9. The use of a motor vehicle according to claim 7, the use comprising:
• a step A: setting or keeping the transmission (50; 150) in the synchronization configuration, while the respective gearboxes (32, 42) of the first power unit (30) and of the second power unit (40) are in the drive configuration; then
• a step B: placing the gearbox (42) of the second power unit (40) in the gearshift configuration, while the transmission (50; 150) is kept in the synchronization configuration and the gearbox (32) of the first power unit (30) is kept in the drive configuration; then
• a step C: placing the gearbox (42) of the second power unit (40) in the drive configuration again, while the transmission (50; 150) is kept in the synchronization configuration and the gearbox (32) of the first power unit (30) is kept in the drive configuration.

10. The use according to claim 9, wherein:
• each motor (31, 41) is an electric motor; and
• step B comprises supercharging the motor (31) of the first power unit (30) with electrical power, compared with the electrical power supplied to the motor (31) of the first power unit (30) during step A, in order to compensate for the releasing of the motor (41) of the second power unit (40) and the input member (23) of the second running gear (20) to rotate freely relative to one another.
